(19) Europäisches Patentamt
European Patent Office
Office européen des brevets

(11) Veröffentlichungsnummer: **0 237 763 B1**

(12) # EUROPÄISCHE PATENTSCHRIFT

(45) Veröffentlichungstag der Patentschrift: **27.12.90**

(51) Int. Cl.⁵: **C08J 5/24**, C08F 222/40

(21) Anmeldenummer: **87101737.2**

(22) Anmeldetag: **09.02.87**

(54) **Verfahren zur Herstellung von hitzehärtbaren Prepregs bzw. Halbzeugen aus Bismaleinimid-Harzen.**

(30) Priorität: **15.02.86 DE 3604872**

(43) Veröffentlichungstag der Anmeldung:
**23.09.87 Patentblatt 87/39**

(45) Bekanntmachung des Hinweises auf die Patenterteilung:
**27.12.90 Patentblatt 90/52**

(84) Benannte Vertragsstaaten:
**CH DE FR GB IT LI**

(56) Entgegenhaltungen:
**DE-A- 2 040 094**
**DE-A- 2 124 740**
**DE-A- 2 728 843**
**DE-A- 3 247 058**
**US-A- 3 770 691**

(73) Patentinhaber: **BASF Aktiengesellschaft, Carl-Bosch-Strasse 38, D-6700 Ludwigshafen(DE)**

(72) Erfinder: **Eisenbarth, Philipp, Dr., Gutleutstr. 12, D-6702 Bad Duerkheim(DE)**
Erfinder: **Heym, Manfred, Dr., Bachweg 6, D-6719 Weisenheim(DE)**
Erfinder: **Stutz, Herbert, Dr., Im Eichbäumle 93, D-7500 Karlsruhe 1(DE)**
Erfinder: **Schornick, Gunnar, Dr., Konrad Adenauer-Str. 8, D-6719 Neuleiningen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung von hitzehärtbaren Prepregs bzw. Halbzeugen, bei dem man ein Umsetzungsprodukt aus Bismaleinimid mit Aminophenol aus der Schmelze auf Verstärkungsfasern aufbringt, sowie die Verwendung solcher Prepregs zur Herstellung von Hochleistungsverbundwerkstoffen.

An Hochleistungsverbundwerkstoffe, die in der Luft- und Raumfahrt eingesetzt werden sollen, werden vor allem in Bezug auf Temperaturbeständigkeit, Zähigkeit und Festigkeit hohe Anforderungen gestellt. Diese Anforderungen können von den üblichen kohlenstoffaserverstärkten Epoxidharzen nicht immer erfüllt werden. Man hat deshalb Prepregs auf Basis von Bismaleinimiden, die mit aromatischen Diaminen kettenverlängert sind, entwickelt und daraus durch Aushärten Verbundwerkstoffe mit verbesserten Eigenschaften hergestellt. Diese sind jedoch für manche Anwendungsfälle immer noch nicht ausreichend, außerdem können die genannten Harze nur aus Lösung auf die Verstärkungsfasern aufgebracht werden, was ein aufwendiges Entfernen der Lösungsmittel notwendig macht.

In der DE-C-27 28 843 sind wärmehärtbare Reaktionsprodukte aus Bismaleinimid, Aminophenol und einem Epoxidharz, sowie gegebenenfalls einem Imidazol beschrieben. Es wird darin auch erwähnt, daß mit diesen Reaktionsprodukten ohne Verwendung eines Lösungsmittels Glasgewebe, Baumwollgewebe oder Papier getränkt werden kann, und daß man das erhaltene Laminat bei 16O bis 2OO°C aushärten kann. Versucht man, auf dieser Basis durch Aufbringen der Reaktionsprodukte auf gerichtete Verstärkungsfasern Prepregs für Hochleistungsverbundwerkstoffe herzustellen, so zeigt sich, daß bei der Fasertränkung eine vorzeitige Vernetzung eintritt. Außerdem bewirken zu große Anteile an Epoxidharzen eine Verringerung der Hitzebeständigkeit gehärteter Formteile.

Die DE-A-32 47 O58 betrifft heißhärtende Mischungen, die ein Bismaleinimid, einen Kettenverlängerer, der z.B. ein zweikerniges Aminophenol sein kann, sowie einen C-C-labilen Polymerisationskatalysator enthält. Darüber hinaus können u.a. auch Vinylmonomere und Allylmonomere in der Mischung enthalten sein. Zweikernige Aminophenole zeigen gegenüber einkernigen eine wesentlich geringere Reaktivität beim Härten; der Zusatz von C-C-labilen Polymerisationskatalysatoren führt zu einer starken Verringerung der Gelzeit, wodurch die Schmelzetränkung erschwert wird. Die heißhärtenden Mischungen können u.a. als Imprägnierharze verwendet werden, wobei der Auftrag auf Verstärkungsfasern aus Lösung erfolgt.

Mit den in DE-A-32 47 058 beispielhaft beschriebenen Harzsystemen ist eine Schmelzetränkung von Verstärkungsfasern nicht möglich; auch durch durch Zusatz von Inhibitoren kann eine vorzeitige Vernetzung nicht verhindert werden.

Der Erfindung lag daher die Aufgabe zugrunde, ein Verfahren zur Herstellung von hitzehärtbaren, faserverstärkten Prepregs zu entwickeln, bei dem auf Verstärkungsfasern problemlos eine ausreichend niedrigviskose Schmelze eines Umsetzungsproduktes aus Bismaleinimid mit Aminophenol aufgebracht werden kann. Diese Prepregs sollen vorzugsweise eine gewisse Klebrigkeit ("tack") aufweisen, wodurch sie leicht durch Verformen, Zusammenfügen und Schneiden verarbeitbar werden können. Schließlich sollen die aus den Prepregs hergestellten Verbundwerkstoffe eine ausgezeichnete Temperaturbeständigkeit, Zähigkeit und Festigkeit aufweisen.

Diese Aufgaben werden durch das erfindungsgemäße Verfahren gelöst.

Gegenstand der Erfindung ist demzufolge ein Verfahren zur Herstellung von hitzehärtbaren Prepregs, bei dem man ein Gemisch herstellt aus

A. einem Bismaleinimid der Formel

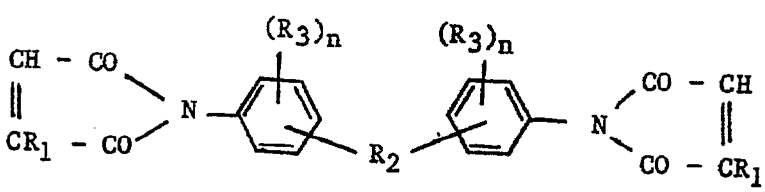

(I),

in der $R_1$ ein Wasserstoffatom oder eine Alkylgruppe, $R_2$ -O-, $-CH_2-$, $-SO_2-$ oder -S-S- ist und $R_3$ Wasserstoffatome, Alkylgruppen oder Chloratome sind und n O,1 oder 2 bedeutet,

B. einem Aminophenol der Formel

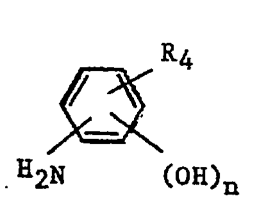

(II),

in der $R_4$ ein Wasserstoffatom, Halogenatom oder eine Alkylgruppe ist und n die ganze Zahl 1 oder 2 ist, wobei das Molverhältnis A : B zwischen 3 : 1 und 1,2 : 1 liegt,

C. 0,1 bis 5 Gew.%, bezogen auf A + B eines sekundären oder tertiären Amins oder Phosphins als Additionskatalysator, und
D. 0,01 bis 5 Gew.%, bezogen auf A + B, eines Polymerisationsinhibitors,
dieses Gemisch zur Umsetzung von A mit B auf Temperaturen zwischen 100 und 200°C erhitzt, gegebenenfalls abkühlt und

E. 5 bis 50 Gew.%, bezogen auf A + B, einer copolymerisierbaren Vinyl- oder Allylverbindung,
F. 0 bis 50 Gew.%, bezogen auf A + B, eines mindestens 2 Epoxidgruppen enthaltenden Epoxidharzes, und
G. 0 bis 5 Gew.%, bezogen auf A + B, eines Peroxidinitiators

zusetzt, die Mischung ggf. wieder aufschmilzt und als Schmelze bei Temperaturen zwischen 20 und 150°C auf Verstärkungsfasern aufbringt.
Zu den Einsatzstoffen ist folgendes zu sagen:

A. Bismaleinimide der Formel I sind bekannt, z.B. aus DE-A-20 40 094, DE-A-27 19 903 und DE-A-32 47 058. Bevorzugt ist 4,4'-Methylen-bis-(N-phenylmaleinsäureimid). Neben Bismaleinimiden sind grundsätzlich auch Tris- und Tetramaleinimide, sowie Mischungen verschiedener Bismaleinimide, auch mit aliphatischen geeignet.
B. Geeignete Aminophenole sind m-, o- und p-Aminophenol, wobei m-Aminophenol bevorzugt ist. Das Molverhältnis A : B liegt zwischen 3 : 1 und 1,2 : 1, vorzugsweise zwischen 2,0 : 1 und 1,8 : 1 und insbesondere zwischen 1,95 : 1 und 1,85 : 1. Es hat sich überraschenderweise gezeigt, daß innerhalb des letztgenannten Bereichs ein Optimum bezüglich der Festigkeit und Zähigkeit ausgehärteter Formkörper auftritt.
C. Als Katalysatoren zur Beschleunigung der Additionsreaktion des Aminophenols an eine Doppelbindung des Bismaleinimids werden 0,1 bis 5, vorzugsweise 0,2 bis 2 Gew.%, bezogen auf die Summe A + B, eines sekundären oder eines tertiären Amins bzw. Phosphins eingesetzt. Bevorzugte Amine sind solche der allgemeinen Formeln $N(R_5)_3$ und $(R_6)_2N - R_7 - N(R_6)_2$, wobei $R_5$, $R_6$ und $R_7$ ggf. substituierte aliphatische oder aromatische Kohlenwasserstoffreste bzw. eine Kohlenwasserstoffbrücke sein können. Bevorzugte Amine sind N,N,N',N'-Tetramethyldiaminodiphenylmethan, N,N-Dimethylanilin und Dimethylbenzylamin. Bei den Phosphinen ist Triphenylphosphin bevorzugt.
D. Als Inhibitoren zur Verhinderung der vorzeitigen radikalischen Polymerisation der Doppelbindung des Bismaleinimids werden übliche, vorzugsweise phenolische Verbindungen, insbesondere Hydrochinon, oder 2,6-Dimethylhydrochinon in Mengen von 0,01 bis 5, vorzugsweise 0,1 bis 1 Gew.%, bezogen auf die Summe A + B, eingesetzt.

Durch geeignete Wahl der Art und Menge der Additionskatalysatoren C und Inhibitoren D kann man die Reaktivität des Gemisches A + B kontrolliert einstellen, so daß die Umsetzung von Bismaleinimid mit Aminophenol bei verhältnismäßig niedrigen Temperaturen genügend rasch erfolgt, ohne daß unerwünschte Vernetzung eintritt und diese auch beim Schmelzeauftrag auf die Verstärkungsfasern und bei der Verarbeitung des Prepregs unterbleibt.
Das Gemisch A + B + C + D, dem gegebenenfalls auch schon an dieser Stelle die Stoffe E, F und G zugemischt werden können, wird auf Temperaturen zwischen 100 und 200°C, vorzugsweise 120 bis 180°C erhitzt, wobei Bismaleinimid und Aminophenol miteinander reagieren. Die Umsetzung dauert im allgemeinen 0,5 bis 45 min lang, danach kann abgekühlt werden und man kann - bevorzugt an dieser Stelle - die Stoffe E, F und G zumischen. Es ist auch möglich, die Komponente C zuletzt zuzumischen

E. Die Vinyl- oder Allylverbindungen, die in Mengen von 5 bis 50, vorzugsweise von 10 bis 40 Gew.%, bezogen auf die Summe A + B, zugemischt werden, werden bei der Aushärtung des Prepregs als Comonomere in die Harzmatrix einpolymerisiert. Sie wirken als Verdünner zur Erniedrigung der Harzviskosität, vor allem aber kann man durch geeignete Wahl der Art und Menge dieser Zusatzstoffe auch in Form von Gemischen mehrerer Vinyl- oder Allylverbindungen, die Klebrigkeit des Prepregs gezielt einstellen und die Erweichungstemperatur des Tränkharzes auf Raumtemperatur absenken. Bevorzugt sind Monomere, die zwei oder drei Vinyl- oder Allylgruppen aufweisen. Geeignet sind z.B. N-Vinylpyrrolidon, N-Vinylcarbazol, Divinylbenzol, Acrylate, Diallylether, ethoxyliertes Bisphenol-A-methacrylat, 3,3'-Diallyl-Bisphenol A, 3,3'-Dipropenyl-Bisphenol A, ferner Umsetzungsprodukte eines Diepoxids mit Acrylsäure oder Methacrylsäure, insbesondere aber Diallylphthalat oder daraus erzeugte Prepolymere, Triallylcyanurat und Triallylisocyanurat.
F. Übliche Epoxidharze in Mengen von 0 bis 50, vorzugsweise von 10 bis 30 Gew.%, bezogen auf A + B, können ebenfalls als reaktive Verdünner wirken, die in die Harzmatrix eingebaut werden.
G. Als Polymerisationsinitiatoren zur Beschleunigung des Härtungsvorgangs können 0 bis 5, vorzugsweise 0,01 bis 2 Gew.%, bezogen auf die Summe A 0 B, üblicher Peroxide, die bei Temperaturen oberhalb von 180°C, vorzugsweise oberhalb von 200°C in Radikale zerfallen, zugesetzt werden.

Ferner können übliche Zusatzstoffe wie Füllstoffe, Farbstoffe, Flammschutzmittel oder Thermoplasten zugemischt werden.

Die Mischung wird erfindungsgemäß als Schmelze bei Temperaturen zwischen 20 und 150°C, vorzugsweise zwischen 60 und 130°C, auf Verstärkungsfasern aufgetragen. Die Verstärkungsfasern können in der Vorzugsrichtung des späteren Verbundwerkstoffs orientiert sein; dabei kommen übliche Endlosfaserstränge (Rovings) aus Glas, aromatischen Polyamiden und bevorzugt Kohlenstoff in Frage, die als Einzel-Roving, als paralleles Fasergelege oder als Gewebe eingesetzt werden können. Beim Aushärten solcher mit gerichteten Fasern verstärkter Prepregs werden Hochleistungsverbundwerkstoffe erhalten.

Daneben sind auch Matten oder Wirrfasergelege aus ungerichteten Endlosfasern geeignet. Dies ergibt verform- und härtbare Halbzeuge, die den SMC (sheet molding compound)-Massen entsprechen.

Vermischt man die Harzmischung mit Kurzfasern, so erhält man BMC (bulk molding compound)-Massen, die z.B. durch Spritzgießen verarbeitet und dann gehärtet werden können.

Das Volumenverhältnis Kunststoffmatrix zu Verstärkungsfasern liegt bevorzugt zwischen 80 : 20 und 15 : 85, insbesondere zwischen 75 : 25 und 35 : 65.

Die erfindungsgemäß hergestellten Prepregs bzw. Halbzeuge können nach üblichen Verfahren zur Herstellung von Form- oder Bauteilen verformt, geschnitten, übereinandergelegt, oder zur Herstellung bevorzugt rotationssymmetrischer Bauteile gewickelt werden. Sie werden dann zu Verbundwerkstoffen ausgehärtet, indem man sie auf Temperaturen zwischen 180 und 300°C, vorzugsweise zwischen 200 und 250°C erhitzt. Dabei tritt eine Vernetzung der Kunststoffmatrix durch Polymerisation der Doppelbindungen der Maleinimid-Gruppen und der Vinyl- oder Allylmonomeren ein.

Die erhaltenen Verbundwerkstoffe weisen excellente mechanische und thermische Eigenschaften auf und können insbesondere als Formteile für die Automobil-, Luft- und Raumfahrtindustrie eingesetzt werden.

<u>Beispiel 1</u>

In einem Reaktionsgefäß wurden unter Rühren bei einer Badtemperatur von 180°C 1432 g 4,4'-Bismaleinimidodiphenylmethan und 5,03 g 2,6-Dimethylhydrochinon aufgeschmolzen. Zur so erhaltenen Schmelze wurden nacheinander 229,5 g 3-Aminophenol sowie 8,38 g N,N,N',N'-Tetramethyl-4,4'-diaminodiphenylmethan eingerührt; nach Entfernen des Heizbades wurde die flüssige, homogene Harzmischung noch 4 Minuten weitergerührt und anschließend zwecks schnelleren Abkühlens auf eine Metallfolie ausgegossen. Nach Erkalten wurde die erstarrte Masse zerkleinert und auf eine Korngröße von <1 mm gemahlen. Der Erweichungspunkt des Harzes lag bei 55°C; seine Gelzeit bei 105°C betrug 57 Minuten.

In einem Reaktionsgefäß wurden bei 120°C zu 300 g Diallylphthalat unter Rühren 1200 g des oben hergestellten Bismaleinimidharzes gegeben, und die flüssige, homogene Mischung wurde noch 5 Minuten bei 120°C weitergerührt. Nach Erkalten erhielt man ein leicht klebriges Harz mit einem Erweichungspunkt <20°C. Seine Gelzeit betrug bei 120°C mehr als 6 Stunden.

Zur Herstellung eines Glasmatten-Prepregs wurden in einer auf 120° vorgeheizten Metallform a) 14,5 g dieses Harzes, b) eine Textilglasmatte der Fa. Vetrotex des Typs M 312 (Maße: 10 × 15 cm, Gewicht: 6,6 g) und c) weitere 14,5 g des Harzes a) übereinandergeschichtet. Der Inhalt der Form wurde 5 Minuten bei 120° und einem Druck von ca. 0,5 bar gepreßt und dann abgekühlt. Man erhielt ein noch schwach klebriges Prepreg mit einem Glasfasergehalt von 25 Gew.%.

Zur Herstellung eines Laminates wurden 5 Lagen des gerade beschriebenen Prepregs übereinandergelegt und 30 Minuten bei 180°C und einem Druck von 0,1 bar verpreßt. Nach Entformung erfolgte eine 10 stündige Nachhärtung bei 240°C.

**Patentansprüche**

1. Verfahren zur Herstellung von hitzehärtbaren Prepregs bzw. Halbzeugen, dadurch gekennzeichnet, daß man ein Gemisch herstellt aus

A. einem Bismaleinimid der Formel

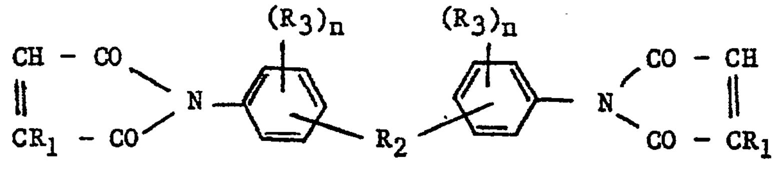 (I),

in der $R_1$ ein Wasserstoffatom oder eine Alkylgruppe, $R_2$ -O-, $-CH_2-$, $-SO_2-$ oder -S-S- ist und $R_3$ Wasserstoffatome, Alkylgruppen oder Chloratome sind und n 0,1 oder 2 bedeutet,

B. einem Aminophenol der Formel

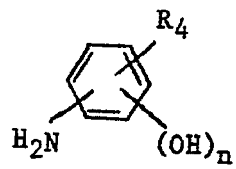

(II),

in der $R_4$ ein Wasserstoffatom, Halogenatom oder eine Alkylgruppe ist und n die ganze Zahl 1 oder 2 ist,

wobei das Molverhältnis A : B zwischen 3 : 1 und 1,2 : 1 liegt,

C. O,1 bis 5 Gew.%, bezogen auf A + B, eines sekundären oder tertiären Amins bzw. Phosphins als Additionskatalysator, und

D. O,O1 bis 5 Gew.%, bezogen auf A + B, eines Polymerisationsinhibitors,

dieses Gemisch zur Umsetzung von A mit B auf Temperaturen zwischen 1OO und 2OO°C erhitzt, gegebenenfalls abkühlt und

E. 5 bis 5O Gew.%, bezogen auf A + B, einer copolymerisierbaren Vinyl- oder Allylverbindung,

F. O bis 5O Gew.%, bezogen auf A 0 B, eines mindestens 2 Epoxidgruppen enthaltenden Epoxidharzes, und

G. O bis 5 Gew.%, bezogen auf A + B, eines Peroxidinitiators

zusetzt, die Mischung ggf. wieder aufschmilzt und als Schmelze bei Temperaturen zwischen 2O und 15O°C auf Verstärkungsfasern aufbringt.

2. Verwendung der nach Anspruch 1 hergestellten Prepregs zur Herstellung von Verbundwerkstoffen durch Aushärten der ggf. verformten Prepregs bzw. Halbzeuge bei Temperaturen zwischen 18O und 3OO°C.

**Claims**

1. A process for preparing a heat curable prepreg or molding compound, which comprises preparing a mixture from

A. a bismaleimide of the formula

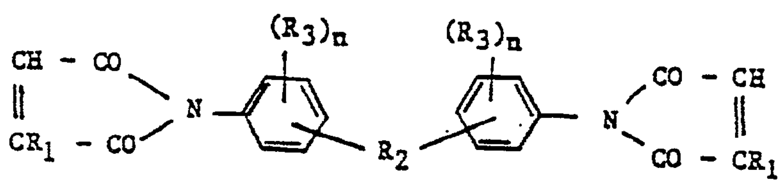

(I)

where $R_1$ is hydrogen or alkyl, $R_2$ is $-O-$, $-CH_2-$, $-SO_2-$ or $-S-S-$, $R_3$ is hydrogen, alkyl or chlorine, and n is 0, 1 or 2,

B. an aminophenol of the formula

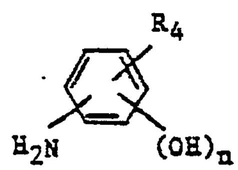

(II)

where $R_4$ is hydrogen, halogen or alkyl and n is 1 or 2,

the molar ratio of A:B being within the range from 3:1 to 1.2:1,

C. from 0.1 to 5% by weight, based on A + B, of a secondary or tertiary amine or phosphine as addition catalyst, and

D. from 0.01 to 5% by weight, based on A + B, of a polymerization inhibitor,

heating this mixture to 100–200°C to react A with B, cooling if necessary and adding

E. from 5 to 50% by weight, based on A + B, of a copolymerizable vinyl or allyl compound,

F. from 0 to 50% by weight, based on A + B, of an epoxy resin containing at least 2 epoxy groups, and

G. from 0 to 5% by weight, based on A + B, of a peroxide initiator,

remelting the mixture if necessary, and applying it as a melt to reinforcing fibers at from 20 to 150°C.

2. The use of a prepreg prepared as claimed in claim 1 for producing composite materials by curing the prepreg or molding compound at from 180 to 300°C with or without molding.

**Revendications**

1. Procédé de préparation de produits pré-imprégnés ou de produits semi-finis thermodurcissables, caractérisé en ce qu'on prépare un mélange de

A. un bismaléimide de formule

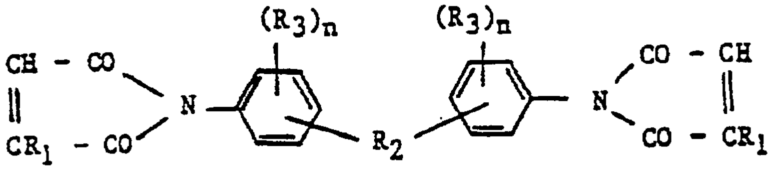

(I),

dans laquelle $R_1$ est un atome d'hydrogène ou un groupement alkyle, $R_2$ est $-O-$, $-CH_2-$, $-SO_2-$ ou $-S-S-$ et les restes $R_3$ sont des atomes d'hydrogène, des groupements alkyle ou des atomes de chlore et n vaut 0, 1 ou 2,

B. un aminophénol de formule

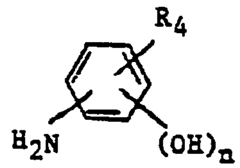

(II),

dans laquelle $R_4$ est un atome d'hydrogène, un atome d'halogène ou un groupement alkyle et n est l'entier 1 ou 2,

le rapport molaire A:B étant compris entre 3:1 et 1,2:1,

C. 0,1 à 5% en poids, par rapport à A + B, d'une amine ou d'une phosphine secondaire ou tertiaire comme catalyseur d'addition, et

D. 0,01 à 5% en poids, par rapport à A + B, d'un inhibiteur de polymérisation, on chauffe ce mélange pour faire réagir A avec B à des températures comprises entre 100 et 200°C, on refroidit éventuellement et on ajoute

E. 5 à 50% en poids, par rapport à A + B, d'un composé vinylique ou allylique copolymérisable,

F. 0 à 50% en poids, par rapport à A + B, d'une résine époxy contenant au moins 2 groupements époxy, et

G. 0 à 5% en poids, par rapport à A + B, d'un agent d'amorçage type peroxyde, on fait éventuellement fondre complètement le mélange et on le dépose sous forme de produit fondu sur des fibres de renforcement à des températures comprises entre 20 et 150°C.

2. Utilisation des pré-imprégnés préparés selon la revendication 1, pour la préparation de matériaux composites par chauffage des pré-imprégnés éventuellement mis en forme ou des produits semi-finis à des températures comprises entre 180 et 300°C.